# FASCICULE DE BREVET EUROPEEN

(11) **EP 1 942 469 B1**
(45) Date de publication et mention de la délivrance du brevet: **05.06.2013**
(21) Numéro de dépôt: 08101218.9
(22) Date de dépôt: 15.06.2005
(51) Int. Cl.: G07F 7/00

(54) **Procédé de distribution automatique de produits**
Automatische Verteilungsvorrichtung für Produkte
Method of automatically dispensing products

(30) Priorité: 16.06.2004 FR 0406507
(43) Date de publication de la demande: 09.07.2008
(62) Demande divisionnaire de: 05777145.3
(73) Titulaire: G.M.S. Drive (SAS), 13747 Vitrolles (FR)
(72) Inventeur: Mazzoni, Alain 117, Résidence Le Clos des Pins, 13320 Bouc-Bel-Air (FR); Ellies, Jean-Noël Chemin de la Muscadelle, 84800 L'Isle-sur-Sorgue (FR)
(74) Mandataire: Roman, Alexis

(56) Documents cités:
- WO-A-00/54229
- DE-A1- 19 511 649
- FR-A- 2 694 487
- US-A- 5 186 281

## Description

La présente invention concerne un procédé de distribution automatique de produits.

Elle concerne le domaine technique des installations équipant les magasins de distribution du type petite, moyenne ou grande surface et permettant à un utilisateur de commander et payer à distance ou sur place les produits de son choix et de venir les récupérer avec son véhicule.

Les clients effectuant leurs achats dans un magasin de distribution sillonnent les différents rayons pour enlever les produits qu'ils désirent. Ces produits sont habituellement positionnés dans un panier, ou, s'ils sont en grand nombre ou lourds, dans un chariot de transport.
Ce mode opératoire est pratique, car dans un même lieu, un grand nombre de produits différents peuvent être sélectionnés. Cependant, la circulation dans les rayons et l'attente aux caisses de paiements peuvent être une perte de temps importante lorsqu'il y a beaucoup d'affluence.

Pour éviter aux utilisateurs de perdre du temps lorsqu'ils effectuent leurs achats, on connaît des dispositifs de livraison équipant des magasins de distribution, permettant à un utilisateur de commander une liste de produits à distance, par exemple par l'Internet et de transmettre cette liste à un préparateur qui sélectionne et regroupe les différents produits souhaités. L'utilisateur peut alors venir chercher sa commande directement à l'intérieur du magasin ou en stationnant son véhicule dans un parc spécialement prévu à cet effet, un livreur apportant la commande jusque dans le coffre dudit véhicule.
Ces solutions ne sont pourtant pas satisfaisantes puisqu'elles sont coûteuses en main d'ouvre et qu'elles obligent le client à venir chercher sa commande durant les heures ouvrées du magasin.

De plus, ces solutions ne permettent pas de gérer des commandes effectuées plusieurs heures à l'avance, aucun dispositif permettant de mettre en attente les commandes n'étant prévu.

Le document WO 00/54229 A décrit un procédé pour distribuer automatiquement des produits en accord avec celui décrit dans le préambule de la revendication 1.

La présente invention a pour but de pallier cet état des choses notamment du fait qu'elle permet à un utilisateur de commander et payer à distance une liste de produits et de venir retirer sa commande directement à proximité de son véhicule, la livraison des produits commandés étant effectuée sans intervention humaine.

Un autre but de l'invention est de permettre à l'utilisateur de retirer sa commande, au moment qu'il aura choisi, 7 jours/7 et 24 heures/24, même durant les heures non ouvrées du magasin.

Un autre but de l'invention est d'éviter que les denrées périssables ne se détériorent lorsque les commandes déjà préparées sont en attente.

Un autre but de l'invention est de faciliter la préparation des commandes.

Un autre but de l'invention est de pouvoir adapter facilement la structure du dispositif de livraison objet de l'invention aux dimensions et capacité de gestion des magasins de distribution qui en seront équipés.

Ces buts sont atteints par un dispositif de distribution automatique de produits s'agençant avec le lieu où sont disponibles les produits d'un magasin de distribution, comportant des moyens pour commander à distance une liste de produits, un terminal informatique de gestion, une ou plusieurs pistes de livraison pour véhicules automobiles, se caractérisant par le fait qu'un système de livraison automatique permettant d'acheminer les bacs de commande dans lesquels sont disposés les produits commandés, depuis le lieu où sont disponibles les produits jusqu'aux pistes de livraison, est agencé avec au moins un dispositif de stockage automatique afin que la livraison des produits commandés soit effectuée automatiquement, au moment désiré par l'utilisateur, sans intervention humaine extérieure.

Plus particulièrement, ces buts sont atteints par le fait que le système de livraison automatique comporte :
- un dispositif d'acheminement mécanique « aller » composé d'une première partie permettant d'acheminer les bacs de commande depuis le lieu où sont disponibles les produits jusqu'au dispositif de stockage automatique et d'une seconde partie permettant d'acheminer les bacs de commande depuis le dispositif de stockage automatique jusqu'aux pistes de livraison ;
- des moyens de sélection commandés par le terminal informatique permettant de diriger les bacs de commandes vers les pistes de livraison déterminées ;
- avantageusement, un dispositif d'acheminement mécanique « retour » des bacs de commandes vides depuis les pistes de livraison jusqu'au lieu où sont disponibles les produits, dans le cas où lesdits bacs ne sont pas récupérés par l'utilisateur ;
de manière à ce que la gestion des bacs de commandes soit facilitée et indépendante d'une intervention humaine.

Ces buts sont également atteints par le fait que le dispositif de stockage automatique comporte un automate manipulateur et des casiers de rangement pouvant contenir les bacs de commande, afin de gérer automatiquement les commandes préparées à l'avance et en attente de livraison.

Ces buts sont également atteints par le fait que les casiers de rangement sont modulables pour s'adapter aux capacités de gestion des magasins équipés du dispositif de distribution objet de l'invention.

Ces buts sont également atteints par le fait que le dispositif objet de l'invention comporte des moyens pour maintenir les produits commandés à une température dirigée, positive ou négative, de manière à éviter la détérioration des produits du type denrée périssable lorsque les bacs de commande sont en attente dans le dispositif de stockage.

Ces buts sont également atteints par le fait que le système informatique de gestion des commandes met en oeuvre une application qui remet en ordre la liste des produits commandés par un client selon l'emplacement desdits produits dans le lieu où sont disponibles les produits, de façon à faciliter la préparation des commandes.

Ces buts sont également atteints par le fait que les pistes de livraison sont modulables de manière à ce que la structure du dispositif de livraison objet de l'invention soit facilement adaptable aux dimensions et capacité de gestion des magasins de distribution qui en seront équipés.

Dans une variante de réalisation, ces buts sont également atteints par le fait que des dispositifs de stockage automatique sont agencés au-dessus de chaque piste de livraison pour améliorer la gestion des commandes préparées qui sont en attente.

Dans une autre variante de réalisation, ces buts sont atteints par le fait que le système de livraison automatique comporte
- un dispositif d'acheminement mécanique « aller » composé d'une première partie permettant d'acheminer les bacs de commande depuis le lieu où sont disponibles les produits jusqu'au dispositif de stockage automatique et d'une seconde partie permettant d'acheminer les bacs de commande depuis le dispositif de stockage automatique jusqu'aux pistes de livraison ;
- avantageusement, un dispositif d'acheminement mécanique « retour » des bacs de commande vides, comportant une première partie permettant d'acheminer les bacs de commande vides depuis les pistes de livraison jusqu'au dispositif de stockage automatique et une seconde partie permettant d'acheminer lesdits bacs de commande depuis ledit dispositif de stockage automatique jusqu'au lieu où sont disponibles les produits,
de manière à ce que la gestion des bacs de commande soit facilitée et indépendante d'une intervention humaine.

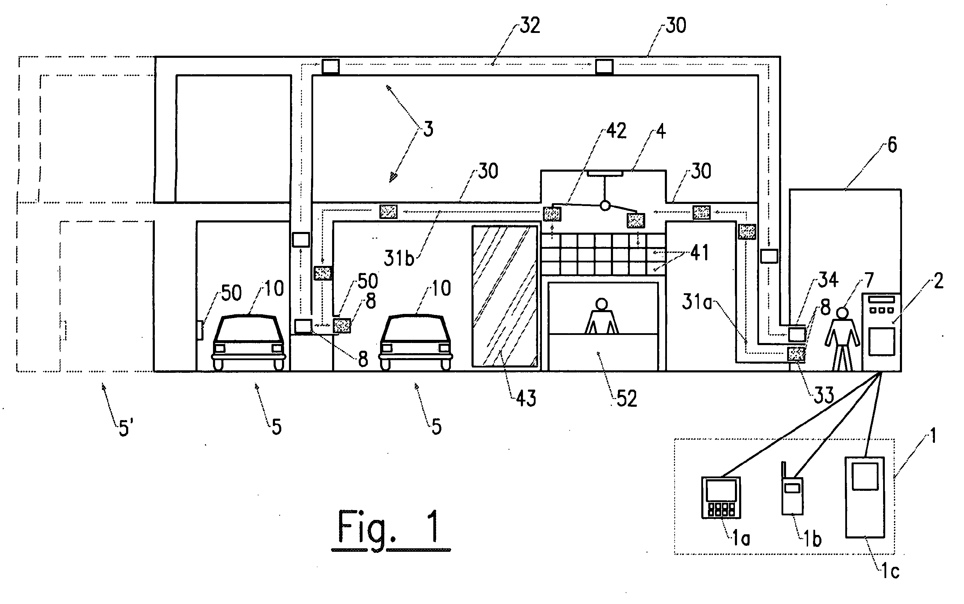

D'autres caractéristiques et avantages de la présente invention ressortiront mieux à la lecture de la description suivante, faite à titre d'exemple indicatif et non limitatif, en regard des dessins annexés, sur lesquels la figure 1 représente une vue schématique du dispositif objet de l'invention montrant les différents éléments constitutifs .

Le dispositif de distribution objet de l'invention est destiné à équiper les magasins de distribution proposant au grand public un large choix de produits de consommation.
Il est préférentiellement situé dans le parc de stationnement d'un magasin de distribution et est connecté au lieu 6 où sont disponibles les produits (par exemple l'entrepôt de stockage) de celui-ci tant au niveau informatique que logistique.
Il permet à un utilisateur de commander et payer à distance ou sur place, les produits de son choix présents dans les magasins de distribution équipés du dispositif de distribution selon l'invention et de les récupérer avec son véhicule 10, au moment qu'il désire.

En se référant à la figure 1, le dispositif de distribution objet de l'invention comporte des moyens de commande 1, un terminal informatique 2 qui gère notamment les informations relatives aux produits, aux utilisateurs et les commandes, un système de livraison automatique 3 des produits commandés, au moins un dispositif de stockage automatique 4 des commandes préparées en attente de distribution, et une ou plusieurs pistes de livraison 5.

Les commandes des produits peuvent se réaliser via des ordinateurs 1a connectés à l'Internet, par téléphones ou télécopies 1b, depuis des bornes à écrans tactiles 1c situées en divers points stratégiques des magasins, ou par tout autre moyen équivalent. Ces moyens de commande 1 permettent à un utilisateur de sélectionner à distance une liste de produits et de transmettre cette liste au terminal informatique 2.
Avantageusement, le terminal informatique 2 propose systématiquement à l'utilisateur un produit similaire au cas où le produit commandé ne serait pas disponible.
Pour gagner du temps, l'utilisateur peut utiliser des propositions de commandes simplifiées.
Avantageusement, toutes les commandes antérieures d'un client sont enregistrées et traitées par le terminal informatique 2 pour analyser les habitudes de consommation et éventuellement délivrer à l'utilisateur un projet de commande personnalisée. L'analyse des commandes antérieures permet, en outre, à l'utilisateur, de bénéficier d'éventuelles réductions (du type coupon de réduction) auxquelles il a droit.

Lorsque l'utilisateur valide sa commande, un code commande lui est attribué et lui sera demandé pour retirer ses produits.

L'utilisateur a la possibilité de régler sa commande à distance via l'Internet en fournissant le numéro de sa carte de paiement ou bien en se rendant à des caisses automatiques de paiements situées à proximité des pistes de livraison 5.

Après validation de la commande, la liste des produits désirés est transmise au terminal informatique 2.
Ce terminal informatique met en oeuvre une application permettant de trier par ordre logique la liste de produits selon leur position dans les rayons du lieu 6 où sont disponibles les produits de manière à ce que le circuit de progression du préparateur 7 soit optimisé dans lesdits rayons pour que la préparation des commandes soit facilitée et la plus rapide possible.

Pour effectuer efficacement la préparation des commandes, le préparateur dispose d'un chariot muni d'un écran de visualisation sur lequel apparaît la liste des produits triés par ordre logique et leur emplacement dans les rayons du lieu 6 où sont disponibles les produits.
Le préparateur rassemble les produits sélectionnés dans un bac de commande 8 disposé sur son chariot de préparation.
Les dimensions des bacs de commande sont préférentiellement adaptées aux produits relativement peu encombrants, du type alimentaire, mais d'autres systèmes peuvent être prévus pour des produits plus volumineux.
Différents bacs de commande peuvent êtres employés : des bacs isothermes, par exemple en polystyrène, permettant de maintenir les produits du type surgelé ou frais à une température dirigée pour maintenir une bonne conservation durant plusieurs heures et des bacs simples, par exemple en plastique rigide ou en carton, pour tous les autres produits.
Dans une variante de réalisation, les bacs de commandes sont compartimentés selon les caractéristiques des produits sélectionnés (produits frais, produits surgelés, autres produits), au moyen de compartiments isothermes.
Un code-barre correspondant au numéro de la commande de l'utilisateur est disposé sur une des faces du bac de commande de manière à pouvoir repérer les commandes et faciliter leur gestion, tout autre moyen équivalent pouvant être utilisé.
Le chariot du préparateur sera avantageusement équipé d'un moyen de lecture optique des codes-barres disposés sur les produits sélectionnés de manière à vérifier leur conformité avec les produits commandés par l'utilisateur et éviter que le préparateur ne se trompe.

Une fois la commande préparée, le préparateur 7 dispose les bacs de commande 8 pleins (représentés hachurés sur les figures annexées) dans le poste de chargement 33 présent dans le lieu 6 où sont disponibles les produits et qui communique avec le système de livraison automatique 3 apte à acheminer automatiquement lesdits bacs de commandes.
Avantageusement, un moyen pour photographier le contenu de chaque bac de commande est prévu au niveau du poste de chargement 33. Ces photographies sont mémorisées avec la référence de la commande par le terminal informatique 2 de manière à disposer d'un moyen de preuve en cas de contestation, ou pour éviter d'éventuelles fraudes.

Ce système de livraison automatique protégé par un tunnel de protection 30, comporte :
- un dispositif d'acheminement mécanique « aller » composé d'une première partie 31a permettant d'acheminer les bacs de commande 8 depuis le lieu 6 où sont disponibles les produits jusqu'au dispositif de stockage automatique 4 et d'une seconde partie 31b permettant d'acheminer les bacs de commande depuis le dispositif de stockage automatique 4 jusqu'aux pistes de livraison 5, sans intervention humaine ;
- des moyens de sélection commandés par le terminal informatique 2 permettant de diriger les bacs de commandes 8 vers les pistes de livraison 5 déterminées ;
- avantageusement, un dispositif d'acheminement mécanique « retour » 32 des bacs de commandes vides (représentés non hachurés sur les figures annexées), depuis les pistes de livraison 5 jusqu'au lieu 6 où sont disponibles les produits.

Le système de livraison automatique 3 peut être agencé selon un plan vertical ou horizontal.

Dès qu'un bac de commande est engagé dans le poste de chargement 33, la première partie 31a du dispositif d'acheminement mécanique « aller » l'amène, au moyen d'un tapis roulant ou de nacelles mécaniques montées sur câbles ou de tout autre moyen de transport équivalent, vers le dispositif de stockage automatique 4.

Le dispositif de stockage automatique 4 permet de gérer les bacs de commande préparés à l'avance et en attente de livraison.
Les bacs de commandes 8 contenant les produits à livrer sont rangés dans des casiers de rangement 41 grâce à un automate 42 du type robot manipulateur commandé par le terminal informatique 2.
Un numéro est attribué à chaque casier de rangement, le terminal informatique 2 établissant une correspondance entre le numéro de casier et le numéro de commande, de manière à repérer la position des bacs de commande dans le dispositif de stockage automatique 4.
Chaque casier de rangement 41 est muni d'un capteur de présence indiquant la présence d'un bac de commande.
Le terminal informatique 2 analyse la configuration du dispositif de stockage 4, à savoir le nombre et le positionnement des bacs de commandes 8 et le nombre et le positionnement des casiers vides, et commande l'automate 42 pour qu'il prenne les bacs de commande présents sur la première partie du dispositif 31a du dispositif d'acheminement mécanique « aller » et les classent dans les casiers de rangement disponibles. Les bacs de commandes 8 sont alors rangés en attendant que les utilisateurs viennent les rechercher.
Un climatiseur et une gaine isolante sont avantageusement prévus dans le dispositif de stockage automatique 4 de manière à maintenir une température dirigée, positive ou négative à l'intérieur dudit dispositif pour maintenir une bonne conservation des produits du type alimentaire.
Le dispositif de stockage automatique pourra également être compartimenté selon le type de produit, par exemple produit sec, frais et congelé, chaque compartiment étant à une température dirigée adéquate pour maintenir une bonne conservation des différents types de produits.
Selon un mode préféré de réalisation, les casiers de rangement 41 sont modulables pour en augmenter ou en diminuer facilement le nombre selon les capacités de gestion des magasins de distribution qui seront équipés du dispositif de distribution objet de l'invention.

Une zone d'intervention technique 43 est avantageusement prévue à proximité du dispositif de stockage automatique 4 de manière à ce qu'un technicien puisse y accéder facilement en cas d'intervention sur un des éléments constitutifs.
Dés qu'un bac de commande 8 est en attente dans le dispositif de stockage automatique 4, le terminal informatique 2 met en oeuvre une application signalant à l'utilisateur que sa commande est prête à être livrée.
Le moyen de signalisation peut être un message délivré par l'Internet, un message téléphonique, un message transmis par télécopie, un message visuel disponible sur des écrans d'informations présents dans le magasin de distribution, ou tout autre moyen équivalent.
Dans le cas où certains produits commandés sont des produits alimentaires frais ou surgelés, le moyen de signalisation indique une heure limite de livraison au-delà de laquelle ces produits risquent de se détériorer.
Le moyen de signalisation peut indiquer, en outre, le numéro de la piste de livraison où sera livrée la commande. Le terminal informatique 2 est apte à analyser le taux d'utilisation du dispositif objet de l'invention selon la tranche horaire, les jours de la semaine, les périodes de manière à anticiper les moments de forte activité pour délivrer un service le plus rapide possible et déterminer la piste de livraison à laquelle l'utilisateur est susceptible d'attendre le moins de temps sa livraison.

Dès que l'utilisateur est averti que sa commande est prête, il peut récupérer sa commande au moment de son choix en positionnant son véhicule 10 sur la piste de livraison 5 indiquée sur le moyen de signalisation, ou n'importe quelle autre piste si aucun numéro de piste n'est indiqué à l'utilisateur.
Selon un mode préféré de réalisation, les pistes de livraison sont agencées sur le parc de stationnement du magasin de distribution.
Les pistes de livraison sont modulables et comme représenté sur les figures annexées par les lignes en pointillés, des extensions 5' sont envisageables de manière à ce que la structure du dispositif de livraison objet de l'invention soit facilement adaptable aux dimensions et capacité de gestion des magasins de distribution.
Un écran d'information muni d'un clavier est positionné au niveau de chaque piste de livraison, permettant à l'utilisateur de composer son code commande.
Des interphones et/ou des visiophones sont disposés à proximité de l'écran d'information muni du clavier de manière à ce que l'utilisateur puisse demander une assistance.
Si l'utilisateur n'a pas déjà payé sa commande, des caisses automatiques de paiements sont prévues.
Après validation du code commande et/ou paiement de la commande correspondante à la caisse automatique de paiements, le terminal informatique 2 active l'automate 42 pour que ce dernier récupère le bac de commande correspondant au code commande saisi et le positionne sur la deuxième partie 31b du dispositif d'acheminement mécanique « aller ».
Les bacs de commande sont alors acheminés mécaniquement au moyen d'un tapis roulant ou de nacelles mécaniques montées sur câbles ou de tout autre moyen de transport équivalent, vers les pistes de livraisons 5.
Des moyens de sélection commandés par le terminal informatique 2 permettent de diriger les bacs de commande vers la piste de livraison 5 où se trouve l'utilisateur.
Comme représentée sur la figure 1, une ouverture de réception 50 située à proximité de la piste de livraison 5 permet à l'utilisateur de retirer les produits du bac de commande et de les disposer dans le coffre de son véhicule dans le cas où les bacs de commande sont récupérés par le magasin. Dans le cas contraire, l'utilisateur a la possibilité de récupérer le bac de commande pour le mettre directement dans le coffre de sa voiture.

Selon un mode préféré de réalisation, un espace d'accueil 52 est prévu à proximité des pistes de livraison 5, pour accueillir, conseiller et guider les utilisateurs.

Plusieurs écrans tactiles et caisses automatiques de paiements sont à disposition des utilisateurs pour qu'ils puissent passer et régler leur commande à partir de ce lieu.
Pour rendre utile le temps d'attente lors de la préparation des produits désirés, lorsque l'utilisateur effectue sa commande directement à partir de l'espace d'accueil, des équipements et services, du type dépôt de photos, distributeur automatique de billets, espace presse, écrans avec informations sur des voyages ou spectacles, sont prévus.
Dés que la commande est prête, un écran de signalisation disposé dans l'espace d'accueil avertit l'utilisateur qu'il peut retirer ses produits.

Lorsque les bacs de commande vides, représentés non hachurés sur la figure 1, doivent être récupérés par le magasin, un dispositif d'acheminement mécanique «retour» 32 est prévu pour amener automatiquement lesdits bacs, depuis la piste de livraison 5 jusqu'au lieu 6 où sont disponibles les produits.
Les bacs de commande sont ainsi acheminés mécaniquement par un tapis roulant ou des nacelles mécaniques montées sur câbles ou tout autre moyen de transport équivalent.
Le préparateur 6 récupère alors les bacs de commande vides au niveau d'un poste de déchargement 34 présent dans le lieu 6 où sont disponibles les produits.
Selon un mode préféré de réalisation, un moyen pour nettoyer et maintenir propre les bacs de commande vides, par exemple une vaporisation de vapeur chaude à l'intérieur desdits bacs, est prévu au niveau du dispositif d'acheminement mécanique « retour » 32.

Dans une variante de réalisation non représentée, le dispositif de stockage automatique 4 unique décrit précédemment est remplacé par des dispositifs de stockage automatique similaires agencés au-dessus de chaque piste de livraison.
Le numéro de la piste de livraison où sera délivrée la commande est communiqué directement avec le numéro de commande où ultérieurement, par exemple par l'intermédiaire d'un écran d'informations générales situé à proximité de la piste de livraison, ladite piste étant déterminée pour que les bacs de commande préparés soient également répartis dans les différents dispositifs de stockage automatique afin d'optimiser le temps de livraison et améliorer la gestion des commandes.
L'utilisateur stationne alors son véhicule sur la piste de livraison déterminée et tape son code commande et/ou effectue le règlement correspondant pour être livré de manière similaire à celle décrite précédemment.

La présence et le positionnement des divers éléments constitutifs donnent à l'objet de l'invention un maximum d'effets utiles qui n'avaient pas été, à ce jour, obtenus par des dispositifs similaires.

## Revendications

1. Procédé pour distribuer automatiquement des produits d'un magasin de distribution, consistant à :
- sélectionner à distance une liste de produits par l'intermédiaire d'un moyen de commande (1), ce dernier permettant de transmettre ladite liste à un terminal informatique (2) de gestion disposé dans un lieu (6) où sont disponibles lesdits produits,
- attribuer un code commande à l'utilisateur lorsque ce dernier valide sa commande,
- après validation de la commande, transmettre la liste des produits désirés au terminal informatique (2) de gestion,
- préparer la commande dans le lieu (6) où sont disponibles les produits et rassembler lesdits produits dans un bac de commande (8),
- acheminer les bacs de commande (8) vers un dispositif de stockage automatique (4) comportant un automate manipulateur (42) et des casiers de rangement (41),
**se caractérisant par le fait qu'**il comporte en outre les étapes suivantes :
- attribuer un numéro à chaque casier de rangement (41), le terminal informatique établissant une correspondance entre le numéro de casier et le numéro de commande de manière à repérer la position des bacs de commande (8) dans le dispositif de stockage (4),
- ranger les bacs de commande (8) dans les casiers de rangement (41) disponibles, le terminal informatique (2) analysant la configuration du dispositif de stockage (4), à savoir le nombre et le positionnement des bacs de commande (8) et le nombre et le positionnement des casiers vides, et commande l'automate (42) pour qu'il classe lesdits bacs de commande dans des casiers de rangement disponibles,
- dès qu'un bac de commande (8) est en attente dans le dispositif de stockage (4), signaler à l'utilisateur que sa commande est prête à être livrée,
- après validation du code commande et/ou paiement de la commande correspondante à une caisse automatique de paiement, activer l'automate (42) pour que ce dernier récupère le bac de commande (8) correspondant au code commande saisi par l'utilisateur,
- acheminer mécaniquement les bacs de commande (8) vers des pistes de livraison (5), des moyens de sélection commandés par le terminal informatique (2) permettant de diriger lesdits bacs de commande vers la piste (5) où se trouve l'utilisateur.

2. Procédé selon la revendication 1, dans lequel les bacs de commande (8) sont acheminés depuis le lieu (6) où sont disponibles les produits jusqu'aux pistes de livraison (5), par l'intermédiaire d'un dispositif d'acheminement mécanique « aller » composé :
- d'une première partie (31a) permettant d'acheminer les bacs de commande (8) depuis le lieu (6) où sont disponibles les produits jusqu'au dispositif de stockage automatique (4),
- et d'une seconde partie (31b) permettant d'acheminer les bacs de commande (8) depuis le dispositif de stockage automatique (4) jusqu'aux pistes de livraison (5), sans intervention humaine.

3. Procédé selon l'une des revendications précédentes, dans lequel les bacs de commande (8) qui ne sont pas récupérés par l'utilisateur, sont acheminés depuis les pistes de livraison (5) jusqu'au lieu (6) où sont disponibles les produits, par l'intermédiaire d'un dispositif d'acheminement mécanique « retour ».

4. Procédé selon l'une des revendications précédentes, dans lequel un code-barre correspondant au numéro de la commande de l'utilisateur est disposé sur une des faces du bac de commande (8).

5. Procédé selon l'une des revendications précédentes, dans lequel le terminal informatique (2) propose systématiquement à l'utilisateur un produit similaire au cas où le produit commandé ne serait pas disponible.

6. Procédé selon l'une des revendications précédentes, dans lequel toutes les commandes antérieures d'un client sont enregistrées et traitées par le terminal informatique (2) pour analyser les habitudes de consommation et délivrer à l'utilisateur un projet de commande personnalisée.

7. Procédé selon l'une des revendications précédentes, dans lequel le terminal informatique (2) met en oeuvre une application permettant de trier par ordre logique la liste de produits selon leur position dans les rayons du lieu (6) où sont disponibles les produits.

8. Procédé selon l'une des revendications précédentes, dans lequel le dispositif de stockage automatique (4) est compartimenté selon le type de produit, chaque compartiment étant à une température dirigée adéquate pour maintenir une bonne conservation des différents types de produits.

9. Procédé selon l'une des revendications précédentes, dans lequel lorsque l'utilisateur est averti que sa commande est prête à être livrée, le moyen de signalisation est un message délivré par l'Internet ou un message téléphonique ou un message transmis par télécopie ou un message visuel disponible sur des écrans d'informations présents dans le magasin de distribution.

10. Procédé selon la revendication 9, dans lequel lorsque certains produits commandés sont des produits alimentaires frais ou surgelés, le moyen de signalisation indique une heure limite de livraison au-delà de laquelle ces produits risquent de se détériorer.

## Patentansprüche

1. Verfahren zur automatischen Ausgabe von Produkten eines Vertriebsgeschäfts, das darin besteht:
- mittels einer Bestelleinrichtung (1) aus der Ferne eine Liste von Produkten auszuwählen, wobei diese es ermöglicht, die Liste an ein EDV-Verwaltungsterminal (2) zu übertragen, das an einem Ort (6) angeordnet ist, an dem die Produkte zur Verfügung stehen,
- dem Benutzer einen Bestellcode zuzuweisen, wenn dieser seine Bestellung bestätigt,
- nach Bestätigung der Bestellung die Liste der gewünschten Produkte an das EDV-Verwaltungsterminal (2) zu übertragen,
- die Bestellung an dem Ort (6), an dem die Produkte zur Verfügung stehen, zu bearbeiten, und die Produkte in einem Bestellungsbehälter (8) zu sammeln,
- die Bestellungsbehälter (8) zu einer automatischen Lagervorrichtung (4) zu befördern, die einen Handling-Automat (42) und Ablagefächer (41) aufweist,
**dadurch gekennzeichnet, dass** es außerdem die folgenden Schritte aufweist:
- Zuweisung einer Nummer zu jedem Ablagefach (41), wobei das EDV-Terminal eine Entsprechung zwischen der Fachnummer und der Bestellnummer herstellt, um die Position der Bestellungsbehälter (8) in der Lagervorrichtung (4) zu markieren,
- Einordnen der Bestellungsbehälter (8) in die verfügbaren Ablagefächer (41), wobei das EDV-Terminal (2) die Konfiguration der Lagervorrichtung (4) analysiert, d.h. die Anzahl und die Positionierung der Bestellungsbehälter (8) und die Anzahl und die Positionierung der leeren Fächer, und den Automaten (42) steuert, damit er die Bestellungsbehälter in verfügbare Ablagefächer einordnet,
- sobald ein Bestellungsbehälter (8) in der Lagervorrichtung (4) in Wartestellung ist, Mitteilung an den Benutzer, dass seine Bestellung lieferbereit ist,
- nach Bestätigung des Bestellcodes und/oder Zahlung der entsprechenden Bestellung an eine automatische Zahlkasse, Aktivieren des Automaten (42), damit dieser den dem vom Benutzer eingegebenen Bestellcode entsprechenden Bestellungsbehälter (8) abholt,
- mechanische Beförderung der Bestellungsbehälter (8) zu Lieferstraßen (5), wobei vom EDV-Terminal (2) gesteuerte Auswahleinrichtungen es ermöglichen, die Bestellungsbehälter zu der Straße (5) zu lenken, wo sich der Benutzer befindet.

2. Verfahren nach Anspruch 1, wobei die Bestellungsbehälter (8) von dem Ort (6), an dem die Produkte zur Verfügung stehen, bis zu den Lieferstraßen (5) mittels einer mechanischen «Hin»-Beförderungsvorrichtung befördert werden, die besteht aus:
- einem ersten Teil (31a), der es ermöglicht, die Bestellungsbehälter (8) von dem Ort (6), an dem die Produkte zur Verfügung stehen, bis zur automatischen Lagervorrichtung (4) zu befördern,
- und einem zweiten Teil (31b), der es ermöglicht, die Bestellungsbehälter (8) ohne menschliche Einwirkung von der automatischen Lagervorrichtung (4) bis zu den Lieferstraßen (5) zu befördern.

3. Verfahren nach einem der vorhergehenden Ansprüche, wobei die Bestellungsbehälter (8), die nicht vom Benutzer abgeholt werden, mittels einer mechanischen «Rück»-Beförderungsvorrichtung von den Lieferstraßen (5) bis zu dem Ort (6) befördert werden, an dem die Produkte zur Verfügung stehen.

4. Verfahren nach einem der vorhergehenden Ansprüche, wobei ein der Bestellnummer des Benutzers entsprechender Strichcode auf einer der Seiten des Bestellungsbehälters (8) angeordnet ist.

5. Verfahren nach einem der vorhergehenden Ansprüche, wobei das EDV-Terminal (2) in dem Fall, in dem das bestellte Produkt nicht zur Verfügung steht, dem Benutzer systematisch ein ähnliches Produkt vorschlägt.

6. Verfahren nach einem der vorhergehenden Ansprüche, wobei alle vorhergehenden Bestellungen eines Kunden vom EDV-Terminal (2) aufgezeichnet und verarbeitet werden, um die Konsumgewohnheiten zu analysieren und dem Benutzer einen benutzerangepassten Bestellungsentwurf zu liefern.

7. Verfahren nach einem der vorhergehenden Ansprüche, wobei das EDV-Terminal (2) eine Anwendung ausführt, die es ermöglicht, die Liste von Produkten gemäß ihrer Position auf den Regalen des Orts (6), an dem die Produkte zur Verfügung stehen, in logischer Reihenfolge zu sortieren.

8. Verfahren nach einem der vorhergehenden Ansprüche, wobei die automatische Lagervorrichtung (4) je nach Produktart in Fächer aufgeteilt ist, wobei jedes Fach auf einer geeigneten gesteuerten Temperatur ist, um eine gute Konservierung der verschiedenen Produktarten aufrechtzuerhalten.

9. Verfahren nach einem der vorhergehenden Ansprüche, wobei, wenn dem Benutzer mitgeteilt wird, dass seine Bestellung lieferbereit ist, die Anzeigeeinrichtung eine über das Internet gelieferte Mitteilung oder eine telefonische Mitteilung oder eine Fax-Mitteilung oder eine visuelle Mitteilung ist, die auf im Vertriebsgeschäft vorhandenen Informationsbildschirmen zur Verfügung steht.

10. Verfahren nach Anspruch 9, wobei, wenn bestimmte bestellte Produkte frische oder tiefgekühlte Lebensmittel sind, die Anzeigeeinrichtung eine Lieferfrist anzeigt, nach der diese Produkte verderben können.

## Claims

1. Method for automatically distributing products from a distribution store, comprising:
- remotely selecting a list of products by means of control means (1), the latter means transmitting said list to a management computer terminal (2) disposed in a location (6) where said products are available,
- assigning an order code to the user when they confirm their order,
- after confirmation of the order, transmitting the list of desired products to the management computer terminal (2),
- preparing the order in the location (6) where the products are available and collecting said products in a order tray (8),
- transporting the order trays (8) to an automatic storage device (4) including a manipulator robot (42) and storage bins (41),
**characterized in that** it further comprises the steps of:
- assigning a number to each storage bin (41), the computer terminal establishing a correspondence between the bin number and the order number in order to mark the position of the order trays (8) in the storage device (4),
- storing the order trays (8) in available storage bins (41), the computer terminal (2) analyzing the configuration of the storage device (4), i.e. the number and position of the order trays (8) and the number and position of empty bins, and instructs the robot (42) to store said order trays in available storage bins,
- as soon as an order tray (8) is queued in the storage device (4), notifying the user that their order is ready to be delivered,
- after confirmation of the order code and/or payment for the corresponding order at an automatic payment point, activating the robot (42) so that it fetches the order tray (8) corresponding to the order code entered by the user,
- mechanically transporting the order trays (8) to delivery lanes (5), selection means controlled by the computer terminal (2) directing said order trays to the lane (5) where the user is located.

2. Method according to claim 1, wherein the order trays (8) are transported from the location (6) where the products are available to the delivery lanes (5) by means of a "go" mechanical transporter device comprising:
- a first portion (31a) for transporting the order trays (8) from the location (6) where the products are available to the automatic storage device (4), and
- a second portion (31b) for transporting the order trays (8) from the automatic storage device (4) to the delivery lanes (5) without human intervention.

3. Method according to either of the preceding claims, wherein order trays (8) that are not retrieved by the user are transported from the delivery lanes (5) to the location (6) where the products are available by means of a "return" mechanical transporter device.

4. Method according to any one of the preceding claims, wherein a bar code corresponding to the user's order number is disposed on one side of the order tray (8).

5. Method according to any one of the preceding claims, wherein the computer terminal (2) systematically offers the user a similar product if the ordered product is not available.

6. Method according to any one of the preceding claims, wherein all previous orders of a customer are recorded and processed by the computer terminal (2) to analyze consumer habits and deliver to the user a personalized order suggestion.

7. Method according to any one of the preceding claims, wherein the computer terminal (2) uses an application to sort the list of products into a logical order according to their position on the shelves of the location (6) where the products are available.

8. Method according to any one of the preceding claims, wherein the automatic storage device (4) is compartmented according to the type of product, each compartment being at a controlled temperature appropriate to maintaining good conservation of the different product types.

9. Method according to any one of the preceding claims, wherein signalling means notify the user that their order is ready to be delivered by means of a message sent via the Internet, a telephone or fax message or a visual message available on information screens in the distribution store.

10. Method according to claim 9, wherein when some of the products ordered are fresh or frozen food the signalling means indicate a delivery time beyond which these products may deteriorate.
